(19) Europäisches Patentamt
European Patent Office
Office européen des brevets

(11) Numéro de publication: **0 245 128**
**A1**

(12) # DEMANDE DE BREVET EUROPEEN

(21) Numéro de dépôt: **87400741.2**

(51) Int. Cl.⁴: **C 04 B 35/49**

(22) Date de dépôt: **03.04.87**

(30) Priorité: **04.04.86 FR 8604857**

(43) Date de publication de la demande: **11.11.87**
**Bulletin 87/46**

(84) Etats contractants désignés: **CH DE ES GB IT LI NL SE**

(71) Demandeur: **THOMSON-CSF, 173, Boulevard Haussmann, F-75379 Paris Cédex 08 (FR)**

(72) Inventeur: **Mage, Jean-Claude, THOMSON-CSF SCPI 19, avenue de Messine, F-75008 Paris (FR)**
Inventeur: **Marcilhac, Bruno, THOMSON-CSF SCPI 19, avenue de Messine, F-75008 Paris (FR)**

(74) Mandataire: **Lepercque, Jean et al, THOMSON-CSF SCPI 19, avenue de Messine, F-75008 Paris (FR)**

(54) **Matériau diélectrique à grande stabilité en température.**

(57) L'invention concerne des matériaux diélectriques à base d'oxydes de titane, d'étain et de zirconium répondant à la composition suivante:

$$t\ TiO_2,\ s\ SnO_2,\ z\ ZrO_2$$

t, s et z désignant des coefficients molaires et satisfaisant aux relations suivantes:

$$s + z + t = 2$$
$$0,75 \leqslant t \leqslant 0,9$$
$$0,225 \leqslant s \leqslant 0,3$$
$$0,8 \leqslant z \leqslant 0,975$$

Ces matériaux peuvent être avantageusement utilisés pour réaliser des résonateurs diélectriques pour oscillateurs hyperfréquences à grande stabilité en température.

EP 0 245 128 A1

# MATERIAU DIELECTRIQUE A GRANDE STABILITE EN TEMPERATURE

L'invention concerne des matériaux diélectriques à grande stabilité en température. Ces matériaux présentent une constante diélectrique élevée et de très faibles pertes et peuvent être utilisés pour fabriquer des résonateurs diélectriques fonctionnant typiquement entre 1 et 100 GHz selon leurs dimensions.

On connaît des matériaux diélectriques dont la composition est un mélange d'oxydes et principalement d'oxydes de titane, d'étain, de zirconium ou de zinc. Ces matériaux permettent la fabrication de résonateurs diélectriques fonctionnant à des fréquences supérieures à 1 GHz. Ils possèdent les caractéristiques suivantes : constante diélectrique relative comprise entre 30 et 40, tangente de l'angle de pertes diélectriques comprise entre $2.10^{-4}$ et $4.10^{-4}$, coefficient de dérive en température du premier ordre de la fréquence de résonance situé entre $-10.10^{-6}$/°C et $+50.10^{-6}$/°C. Le principal paramètre à contrôler est le comportement de la fréquence de résonance en fonction de la température. La dérive en fréquence peut être représentée par un développement polynomial. Jusqu'à présent on a cherché à contrôler le coefficient du premier ordre de ce développement polynomial. C'est le cas notamment du brevet FR 2 477 137 qui décrit des matériaux possédant un coefficient du premier ordre de quelques $10^{-6}$/°C. Cependant, les défauts de linéarité des courbes représentant la fréquence en fonction de la température limitent la stabilité des dispositifs à typiquement $\pm$ 100 kHz sur un intervalle de 60°C pour une fréquence de 10 GHz.

Afin de pallier ces inconvénients, la présente invention propose des matériaux dont la composition est déterminée de façon à contrôler simultanément les coefficients du premier et du second ordre du développement polynomial. Ces coefficients dépendent également des conditions de préparation de ces matériaux.

L'invention a donc pour objet un matériau diélectrique à base

d'oxydes de titane, d'étain et de zirconium, caractérisé en ce qu'il répond à la composition suivante :

$t\ TiO_2, s\ SnO_2, z\ ZrO_2$

t, s et z désignant des coefficients molaires et satisfaisant aux relations suivantes :

$s + z + t = 2$

$0{,}75 \leqslant t \leqslant 0{,}9$

$0{,}225 \leqslant s \leqslant 0{,}3$

$0{,}8 \leqslant z \leqslant 0{,}975$

L'invention sera mieux comprise et d'autres avantages apparaîtront au moyen de la description qui va suivre, donnée à titre non limitatif, et des figures annexées parmi lesquelles :

- la figure 1 représente le banc de mesure utilisé pour le relevé de différentes caractéristiques des matériaux selon l'invention,
- la figure 2 est un diagramme représentant la variation de la fréquence de résonance d'un oscillateur stabilisé par un matériau selon l'invention et en fonction de la température.

Le comportement de la fréquence de résonance f d'un résonateur diélectrique en fonction de la température T peut être décrit par le développement polynomial suivant :

$$\frac{f}{fo} = 1 + A\,(T - To) + B\,(T - To)^2 + C\,(T - To)^3 + \ldots$$

fo représentant la fréquence de résonance du résonateur pour la température de référence To que l'on choisit généralement égale à 20°C. Les valeurs des coefficients (A, B, C, etc) du développement polynomial décroissent rapidement lorsque leur ordre croît. Il existe un facteur d'environ 1000 entre les coefficients A et B. Cependant, lorsque la dérive en température est importante, le terme $B(T - To)^2$ ne peut plus être négligé devant $A\,(T - To)$.

Les autres paramètres importants pour un résonateur diélectrique sont :

- la constante diélectrique $\varepsilon$ qui doit être comprise entre 30 et 40 ;
- le coefficient de surtension Q qui correspond idéalement à

l'inverse de la tangente de pertes diélectriques tg $\delta$. Comme cette dernière varie de façon quasi-linéaire avec la fréquence, la grandeur la plus significative est le produit du coefficient de surtension Q par la fréquence. Ce produit est exprimé en gigahertz ou en térahertz et est pratiquement constant en fonction de la fréquence (environ 40 THZ).

Les matériaux selon l'invention peuvent être préparés de la façon suivante. Les matières premières (oxydes de titane, d'étain et de zirconium) sont pesées en fonction de la composition choisie. On peut ajouter à ces matières premières de l'oxyde de nickel $NiO$ et de l'oxyde de lanthane $La_2O_3$ à raison des valeurs pondérales respectives de l'ordre de 1 et 2%. Ces ajouts ont essentiellement pour but de favoriser le frittage subséquent. Un broyage en milieu aqueux à l'aide de billes d'acier est effectué pour obtenir le mélange. Les quantités en poids des différentes parties sont les suivantes : 300 grammes de poudre, 600 grammes de billes en acier de diamètre 4mm et 300 grammes d'eau. La durée du broyage est de 5 heures. On réalise ensuite l'enrobage du produit obtenu au moyen d'un liant, par exemple par le liant connu sous la marque déposée "rhodoviol". On effectue ensuite un compactage du matériau à 2 tonnes/$cm^2$ dans un moule en acier de diamètre 12 mm. L'opération suivante est constituée par le frittage qui comprend une montée en température qui dure environ 30 minutes puis un palier à 1354°C pendant 30 minutes sous oxygène et ensuite la descente en température est effectuée en 30 minutes.

Les mesures permettant de déterminer les caractéristiques électriques du matériau ont été effectuées sur des pièces brutes de frittage. La fréquence de résonance de ces pièces est d'environ 4 GHz. Le banc de mesure utilisé pour le relevé des différentes caractéristiques est représenté en figure 1. L'amélioration des performances par rapport aux bancs utilisés généralement a été obtenue en remplaçant le système de détection utilisé, qui comprenait une diode associée à un microvoltmètre, par un microwattmètre 1 plus précis et moins sensible aux parasites. On a utilisé également

une étuve programmable en température et en humidité. Le porte-échantillon est monté sur une potence reliée à l'extérieur de l'étuve pour éliminer les vibrations. Le contrôle de l'ensemble est assuré par un micro-ordinateur 2. Le banc de mesure comprend une étuve 3 équipée d'un porte-échantillon constitué d'une plaque support 4 en cuivre. Sur la plaque 4 est posé l'échantillon 5 à mesurer et un échantillon factice 6. Une plaque 7 en cuivre placée au-dessus de la plaque 4 et soutenue par une entretoise 8 en céramique surplombe les échantillons 5 et 6. Une sonde de platine 9 de mesure de la température relève la température de l'échantillon factice 6 pour ne pas perturber les mesures électriques à effectuer sur l'échantillon 5. Les liaisons électriques avec l'échantillon 5 sont assurées par des câbles coaxiaux semi-rigides 10 et 11.Le banc de mesure comprend encore un ohmmètre 4 fils 12, un générateur synthétisé 13 et une sonde hyperfréquence 14. Le micro-ordinateur 2 est connecté au reste du banc grâce à un bus 15. La cellule de mesure correspond à la méthode définie par HAKKI et COLEMAN (IRE Transactions on Microwave Theory and Techniques, July 1960, p. 402).

Les mesures sont effectuées en atmosphère sèche selon le cycle suivant :

- recherche manuelle et identification des pics de résonance,
- verrouillage du système de mesure sur le mode $TE_{011}$,
- descente en température programmée de +100°C à -40°C en deux heures avec enregistrement des données par calcul de la matrice de covariances f - T entre +80°C et -20°C,
- retour à l'ambiance et inversion de la matrice de covariances pour l'obtention des coefficients A, B et C.

Le tableau I, placé en fin de description, regroupe les principales caractéristiques de matériaux répondant à la composition suivante : t $TiO_2$, s $SnO_2$, z $ZrO_2$ avec $s + z + t = 2$. Pour chacun de ces matériaux, on a regroupé les valeurs de t, s et z, les valeurs de la densité crue, de la densité frittée, de A, de B, de la constante diélectrique $\varepsilon$ et du produit Q x f exprimé en THz. D'après ce tableau, on voit que de légères variations des paramètres t, s ou z

peuvent entraîner de sensibles variations des paramètres A et B. Les matériaux selon l'invention sont ceux pour lesquels les variations de la fréquence de résonance en fonction de la température sont les plus faibles possibles. Les valeurs de A et B qui sont respectivement inférieures à $16.10^{-6}$ et $10.10^{-9}$ sont considérées comme les plus remarquables. Les matériaux selon l'invention seront donc ceux pour lesquels on aura à la fois $A < 16.\ 10^{-6}$ et $B < 10.\ 10^{-9}$, c'est-à-dire ceux pour lesquels :

$0,8 \leqslant z \leqslant 0,975$

$0,225 \leqslant s \leqslant 0,3$

$0,75 \leqslant t \leqslant 0,9$

Les éventuels ajouts d'oxyde de nickel NiO et d'oxyde de lanthane ne provoquent qu'un léger décalage de ces valeurs.

Il faut noter cependant qu'il peut se produire une dispersion de caractéristiques pour des échantillons issus d'un même matériau. Cette dispersion peut être de l'ordre de quelques unités pour les coefficients A et B (aux facteurs $10^{-6}$ et $10^{-9}$ près).

Ces conditions de préparation des matériaux sont données à titre indicatif et peuvent être modifiées dans de larges proportions. A titre d'exemple, le tableau II, placé en fin de description montre l'effet d'un chamottage effectué avant le frittage sur les coefficients A, B et Q x f.

Le tableau II reprend des échantillons dont les compositions sont déjà citées dans le tableau I (N° 26, 38, 41, 46 et 49) mais dont les caractéristiques varient quelque peu pour les raisons exposées plus haut. Il convient de noter que les valeurs de Q x f ont été mesurées à 4 GHz et qu'elles s'améliorent à fréquence plus élevée pour atteindre typiquement 50 THz au-delà de 10 GHz. Dans ce tableau, on a également mentionné l'influence de la durée du palier de température lors du frittage sur les caractéristiques des matériaux (densités crue et frittée, A, B, $\varepsilon$ et Q x f). D'après ce tableau, on voit que les conditions de frittage, l'existence ou non d'un chamottage influent quelque peu sur les caractéristiques des matériaux.

On peut mettre à profit ces variations pour ajuster ou sélectionner un matériau en fonction des exigences d'un dispositif particulier. Les matériaux présentant les valeurs de A et de B les plus faibles ne seront pas forcément les plus recherchés. Par exemple, le matériau N° 26 mentionné dans le tableau I possède les coefficients A et B suivant : A = 7, B = 1. Cette valeur de A est particulièrement intéressante car, dans certains montages, elle compensera des variations de température opposées. Ce matériau, à cause aussi de la valeur de B particulièrement faible, présente donc un grand intérêt pour les applications pratiques.

Des résonateurs réalisés à partir de ces matériaux permettent en particulier la réalisation d'oscillateurs très stables dont la fréquence dérive de moins de $2.10^{-6}$ dans la gamme de température qui va de -15°C à 50°C. Ces oscillateurs peuvent être réalisés par exemple dans le domaine des faisceaux hertziens ou dans les récepteurs de télévision à transmission directe ou par satellite. Ils peuvent aussi servir à la réalisation de filtres hyperfréquences ou de discriminateurs de fréquence très stables. La figure 2 est un diagramme représentant la variation de la fréquence de résonance f d'un oscillateur stabilisé par un matériau selon l'invention en fonction de la température T. L'oscillateur utilisé est celui décrit dans la demande de brevet FR 2 504 325. Le résonateur diélectrique utilise le matériau selon l'invention N° 26 du tableau I. L'axe des ordonnées du diagramme porte la fréquence en MHz et l'axe des abcisses la température en °C. D'après ce diagramme on constate que la stabilité est meilleure que ± 15 kHz entre -25°C et +35°C, à comparer avec une variation de ± 100 kHz dans la même gamme de température pour le même oscillateur fonctionnant avec un résonateur réalisé à partir d'un matériau de l'art antérieur décrit dans la demande de brevet FR 2 477 137.

TABLEAU 1

| n° | z | s | t | Densité crue | Densité frittée | A x$10^6$ | B x$10^9$ | ε | Qxf |
|---|---|---|---|---|---|---|---|---|---|
| 1 | 1,3 | 0,2 | 0,5 | 3,47 | 5,44 | -11 | +3 | 27,7 | 13 |
| 2 | 1,2 | 0,2 | 0,6 | 3,45 | 5,33 | +15 | -2 | 30,9 | 14 |
| 3 | 1,1 | 0,3 | 0,6 | 3,51 | 5,36 | -6 | +40 | 32,2 | |
| 4 | 1,1 | 0,2 | 0,7 | 3,35 | 5,20 | +42 | -11 | 35,2 | 24 |
| 5 | 1,0 | 0,3 | 0,7 | 3,34 | 5,21 | -2 | +15 | 34 | 30 |
| 6 | 1,0 | 0,2 | 0,8 | 3,22 | 5,01 | +27 | -15 | 34,3 | 30 |
| 7 | 0,9 | 0,3 | 0,8 | 3,23 | 5,20 | - 4 | +4 | 33,7 | 36 |
| 8 | 0,9 | 0,2 | 0,9 | 3,14 | 4,99 | +14 | -7 | 33,7 | 31 |
| 9 | 0,8 | 0,3 | 0,9 | 3,16 | 4,85 | -5 | -4 | 31 | 35 |
| 10 | 0,8 | 0,2 | 1,0 | 3,06 | 4,51 | +10 | -20 | 31,1 | 30 |
| 11 | 0,7 | 0,3 | 1,0 | 3,09 | 4,66 | +0,4 | -14 | 30,7 | 32 |
| 12 | 0,7 | 0,35 | 0,95 | 3,15 | 4,95 | -3 | -20 | 32,5 | 37 |
| 13 | 0,7 | 0,25 | 1,05 | 3,05 | 4,96 | +10 | -32 | 36,6 | 34 |
| 14 | 0,6 | 0,4 | 1 | 3,08 | 5,12 | +32 | -60 | 35,9 | 38 |
| 15 | 0,5 | 0,5 | 1 | 3,11 | 5,14 | +116 | -130 | 39,6 | 27 |
| 16 | 0,55 | 0,5 | 0,95 | 3,14 | 5,13 | +65 | -95 | 35,4 | 32 |
| 17 | 0,65 | 0,5 | 0,85 | 3,24 | 5,25 | -14 | +1 | 30,7 | 43 |
| 18 | 0,5 | 0,6 | 0,9 | 3,20 | 5,19 | +97 | -235 | 34,5 | 25 |
| 19 | 0,6 | 0,6 | 0,8 | 3,25 | 5,31 | -20 | -67 | 30,7 | 32 |
| 20 | 0,5 | 0,7 | 0,8 | 3,50 | 5,40 | +58 | +590 | 30,4 | 26 |
| 21 | 0,6 | 0,7 | 0,7 | 3,28 | 5,43 | +16 | -55 | 28,5 | 33 |
| 22 | 0,6 | 0,8 | 0,6 | 3,46 | 5,52 | +16 | -45 | 26,3 | 31 |
| 23 | 0,7 | 0,8 | 0,5 | 3,54 | 5,60 | -13 | -8 | 24,4 | 32 |
| 24 | 0,5 | 0,8 | 0,7 | 3,35 | 5,32 | +61 | -105 | 28,2 | 28 |

| n° | z | s | t | Densité crue | Densité frittée | A x10[6] | B x10[9] | ε | Qxf |
|---|---|---|---|---|---|---|---|---|---|
| 25 | 0,95 | 0,3 | 0,75 | 3,42 | 5,23 | -4 | -1 | 33,1 | 36 |
| 26 | 0,95 | 0,25 | 0,8 | 3,36 | 5,16 | +7 | +1 | 34,1 | 36 |
| 27 | 0,915 | 0,285 | 0,8 | 3,36 | 5,12 | -2 | -1 | 33,5 | 36 |
| 28 | 0,95 | 0,285 | 0,765 | 3,31 | 5,30 | -0,5 | +1 | 34,0 | 38 |
| 29 | 0,7 | 0,6 | 0,7 | 3,47 | 5,51 | -17 | -21 | 28,8 | 44 |
| 30 | 0,7 | 0,7 | 0,6 | 3,58 | 5,60 | -12 | -21 | 25,1 | 39 |
| 31 | 0,7 | 0,5 | 0,8 | 3,39 | 5,40 | -22 | -7 | 30,5 | 39 |
| 32 | 0,7 | 0,4 | 0,9 | 3,30 | 5,25 | -15 | -12 | 33,1 | 45 |
| 33 | 0,6 | 0,5 | 0,9 | 3,30 | 5,31 | +12 | -33 | 33,4 | 35 |
| 34 | 0,65 | 0,45 | 0,9 | 3,32 | 5,29 | -15 | -10 | 32,6 | 36 |
| 35 | 0,65 | 0,6 | 0,75 | 3,47 | 5,45 | -5 | -23 | 29,6 | 41 |
| 36 | 0,65 | 0,55 | 0,8 | 3,42 | 5,40 | -9 | -18 | 33,7 | 44 |
| 37 | 0,65 | 0,65 | 0,7 | 3,42 | 5,50 | -3 | -21 | 28,7 | 37 |
| 38 | 0,925 | 0,25 | 0,825 | | | +5,0 | +0,1 | 34,1 | 35 |
| 39 | 0,95 | 0,225 | 0,825 | | | +12,1 | -1,0 | 34,5 | 32 |
| 40 | 0,975 | 0,225 | 0,8 | | | +15,3 | +1,7 | 34,2 | 30 |
| 41 | 0,975 | 0,25 | 0,775 | | | +9,1 | +3,2 | 33,9 | 32 |
| 42 | 0,7 | 0,9 | 0,4 | | | -17,6 | -19,7 | 21,9 | 33 |
| 43 | 0,6 | I | 0,4 | | | -3,7 | -23,1 | 20,6 | 33 |
| 44 | 0,975 | 0,275 | 0,75 | | | +2,8 | +6,6 | 33,5 | 32 |
| 45 | 0,9 | 0,275 | 0,825 | | | -1 | -0,2 | 34 | 35 |
| 46 | 0,9 | 0,25 | 0,85 | | | +3,1 | -0,7 | 33,7 | 33 |
| 47 | 0,925 | 0,225 | 0,85 | | | +9,3 | -3,9 | 34,7 | 33 |
| 48 | I | 0,225 | 0,775 | | | +18,6 | +2,4 | 34,5 | 30 |
| 49 | 1 | 0,25 | 0,75 | | | +11,2 | +7,1 | 33,8 | 31 |

TABLEAU II

| Durée du palier | n° | Chamot-tage | Densité crue | Densité frittéee | A x10$^6$ | B x10$^9$ | $\varepsilon$ | Qxf |
|---|---|---|---|---|---|---|---|---|
| 1/2 h | 26 | non | 3,25 | 5,06 | +6,3 | +2,0 | 33,3 | 35 |
| | | oui | 3,17 | 5,19 | +9,1 | -1,8 | 34,6 | 33 |
| | 38 | non | 3,27 | 5,03 | +4,07 | -1,4 | 32,9 | 33 |
| | | oui | 3,16 | 5,05 | +13,2 | -6,6 | 33,7 | 33 |
| | 41 | non | 3,34 | 5,11 | +9,2 | -0,1 | 33,5 | 33 |
| | | oui | 3,21 | 5,18 | +14,5 | -6,6 | 33,4 | 33 |
| | 46 | non | 3,26 | 5,02 | +2,8 | -3,8 | 33,3 | 33 |
| | | oui | 3,12 | 5,04 | +11,8 | -7,4 | 33,9 | 34 |
| | 49 | non | 3,35 | 5,14 | +11,0 | +7,2 | 33,5 | 33 |
| | | oui | 3,18 | 5,15 | +19,5 | -4,7 | 34 | 32 |
| 1 h | 26 | non | | | | | | |
| | | oui | 3,19 | 5,23 | +7,4 | -1,9 | 35 | 31 |
| | 38 | non | 3,27 | 5,12 | +5,1 | -2,1 | 34,1 | 34 |
| | | oui | 3,15 | 5,08 | +8,7 | -6,8 | 33,8 | 33 |
| | 41 | non | 3,33 | 5,20 | +9,3 | +3,6 | 34,3 | 33 |
| | | oui | 3,19 | 5,20 | +12,0 | +0,4 | 34,5 | 33 |
| | 46 | non | 3,26 | 5,10 | +3,4 | -3,0 | 34,1 | 35 |
| | | oui | 3,12 | 5,07 | +7,0 | -8,5 | 34,0 | 35 |
| | 49 | non | 3,36 | 5,23 | +11,4 | +4,0 | 34,3 | 33 |
| | | oui | 3,20 | 5,18 | +15,0 | -3,4 | 34,0 | 32 |

| Durée du Palier | n° | Chamot-tage | Densité crue | Densité frittée | A x10⁶ | B x10⁹ | ε | Qxf |
|---|---|---|---|---|---|---|---|---|
| 2 h | 26 | non | 3,24 | 5,18 | +7,7 | -2,7 | 34,7 | 36 |
| | | oui | 3,18 | 5,21 | +8,3 | -4,6 | 35,0 | 36 |
| | 38 | non | 3,25 | 5,17 | +6,5 | -4,9 | 34,7 | 35 |
| | | oui | 3,15 | 5,11 | +7,8 | -2,1 | 34,1 | 35 |
| | 41 | non | 3,34 | 5,21 | +10,2 | +3,8 | 34,7 | 32 |
| | | oui | 3,20 | 5,22 | +11,0 | -0,6 | 34,8 | 35 |
| | 46 | non | 3,26 | 5,14 | +5,5 | -5,1 | 34,8 | 37 |
| | | oui | 3,13 | 5,09 | +6,9 | -6,2 | 34,4 | 36 |
| | 49 | non | 3,34 | 5,25 | +11,6 | +0,5 | 34,8 | 34 |
| | | oui | 3,19 | 5,19 | +12,8 | -1,0 | 34,1 | 34 |
| 4 H | 26 | non | 3,26 | 5,19 | +9,2 | -2,9 | 35,4 | 33 |
| | | oui | 3,18 | 5,20 | +8,8 | -2,9 | 35,1 | 37 |
| | 38 | non | 3,25 | 5,20 | +7,8 | -6,5 | 35,1 | 37 |
| | | oui | 3,16 | 5,13 | +8,0 | -6,8 | 34,4 | 34 |
| | 41 | non | 3,34 | 5,24 | +10,9 | -2,0 | 35,1 | 33 |
| | | oui | 3,20 | 5,23 | +10,4 | +0,9 | 34,8 | 34 |
| | 46 | non | 3,26 | 5,18 | +6,5 | -6,5 | 35,2 | 36 |
| | | oui | 3,12 | 5,12 | +6,2 | -8,5 | 34,5 | 36 |
| | 49 | non | 3,34 | 5,27 | +12,2 | +0,7 | 35,2 | 34 |
| | | oui | 3,19 | 5,21 | +11,8 | +2,3 | 34,4 | 34 |

## REVENDICATIONS

1. Matériau diélectrique à base d'oxydes de titane, d'étain et de zirconium, caractérisé en ce qu'il répond à la composition suivante :

$t\ TiO_2,\ s\ SnO_2,\ z\ ZrO_2$

t, s et z désignant des coefficients molaires et satisfaisant aux relations suivantes :

$s + z + t = 2$

$0,75 \leqslant t \leqslant 0,9$

$0,225 \leqslant s \leqslant 0,3$

$0,8 \leqslant z \leqslant 0,975$

2. Matériau diélectrique selon la revendication 1, caractérisé en ce qu'il comprend également des ajouts d'oxyde de nickel et d'oxyde de lanthane.

3. Matériau diélectrique selon la revendication 2, caractérisé en ce que les ajouts d'oxyde de nickel et d'oxyde de lanthane représentent respectivement 1% et 2% en poids du matériau diélectrique.

4. Matériau diélectrique selon l'une quelconque des revendications 1 à 3, caractérisé en ce que t = 0,8, s = 0,25 et z = 0,95.

0245128

Office européen des brevets

# RAPPORT DE RECHERCHE EUROPEENNE

Numero de la demande

EP 87 40 0741

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 035 082 (THOMSON-CSF) * Revendications 1-8 * & FR-A-2 477 137 (Cat. D) * | 1-3 | C 04 B 35/49 |
| | ----- | | |
| | | | DOMAINES TECHNIQUES RECHERCHES (Int. Cl.4) |
| | | | C 04 B 35/00 |

Le présent rapport de recherche a été établi pour toutes les revendications

| Lieu de la recherche | Date d'achèvement de la recherche | Examinateur |
|---|---|---|
| LA HAYE | 15-07-1987 | DROUOT M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant